## Europäisches Patentamt
## European Patent Office
## Office européen des brevets

(19)

(11) Numéro de publication: **0 144 259**
**B1**

(12)

# FASCICULE DE BREVET EUROPÉEN

(45) Date de publication du fascicule du brevet:
24.02.88

(51) Int. Cl.⁴: **B 62 D 5/12,** B 62 D 5/22,
B 62 D 5/087

(21) Numéro de dépôt: **84402244.2**

(22) Date de dépôt: **07.11.84**

(54) Mécanisme de direction assistée compacte pour véhicule automobile.

(30) Priorité: **18.11.83 ES 527577**

(43) Date de publication de la demande:
**12.06.85 Bulletin 85/24**

(45) Mention de la délivrance du brevet:
**24.02.88 Bulletin 88/8**

(84) Etats contractants désignés:
**DE FR GB IT**

(56) Documents cité:
**WO-A-81/00239**
**CH-A-344 316**
**FR-A-2 122 236**
**FR-A-2 186 914**
**FR-A-2 357 413**
**US-A-3 605 934**
**US-A-4 141 432**

(73) Titulaire: **BENDIX ESPANA S.A., Balmes 243,
Barcelona 6 (ES)**

(72) Inventeur: **Estela Rosell, Jorge, c/ Escornalbou 23
1o 1a, Barcelona 26 (ES)**

(74) Mandataire: **Le Moenner, Gabriel, Division
Technique Service Brevets Bendix Europe 126,
rue de Stalingrad, F-93700 Drancy (FR)**

EP 0 144 259 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1988

## Description

La présente invention concerne les mécaniames de direction assistée pour véhicule automobile et, plus particulièrement, in mécanisme de direction assistée du type comprenant un boîtier de direction fixe présentant une configuration générale tubulaire et dans lequel est agencé un ensemble coopérant à pignon et à crémaillère, le pignon étant destiné à être relié à un organe de commande d'entrée du mécanisme, un ensemble d'assistance à fluide sous pression comprenant un piston fixe, solidarisé au boîtier par une tige creuse, et un cylindre mobile couplé de façon élastique à le crémaillère et délimitant une première et une seconde chambres de pression de part et d'autre du piston, et un moyen de valve de distribution actionnable par l'organe de commande d'entrée pour alimenter sélectivement en fluide sous pression lesdites première et seconde chambres via des passages de fluide ménagés dans la tige creuse.

Un mécanisme de ce type est décrit dans le document FR-A-2 357 413. Dans ce document, pour éviter les problèmes de surlongueur axiale des mécanismes à piston mobile en bout de la crémaillère, il est prévu un ensemble coopérant piston/cylindre d'assistance disposé en parallèle du boîtier de direction fixe, à l'extérieur de celui-ci. Cet agencement présente toutefois les inconvénients d'augmenter les dimensions transversales du mécanisme, d'alourdir ce dernier, et d'augmenter le nombre des zones coulissantes à protéger. D'autre part, dans ce document, la crémailléere coulisse, au moyen de coussinets tubulaires, dans le boîtier de direction fixe qui doit être usiné avec précision à cet effet, la jonction entre la crémaillère et le cylindre mobile d'assistance s'effectuant par l'intermédiaire de ces paliers de coulissement.

La présente invention a pour objet de proposer un mécanisme de direction assistée du type susmentionné, de configuration particulièrement compacte et robuste, de faibles coûts de fabrication et permettant d'utiliser un boîtier non usiné intérieurement et une crémaillère simplifiée ne nécessitant pas un usinage de très grande précision.

Pour ce faire, selon une caractéristique de l'invention, le boîtier présente une configuration générale tubulaire avec des parois d'extrémité opposées, la tige creuse étant disposée dans le boîtier entre ces parois d'extrémité, la crémaillère étant montée élastiquement sur le cylindre mobile également intégré dans le boîtier, et le cylindre et la crémaillère étant guidés par des paliers coulissants d'extrémité montés dans le cylindre.

D'autres caractéristiques et avantages de la présente invention resortiront de la description suivante de modes de réalisation, donnés à titre indicatif mais nullement limitatif, faite en relation avec les dessins annexés, sur lesquels:

- La Fig. 1 est une vue en coupe longitudinale d'un mécanisme de direction assistée compacte selon l'invention;
- la Fig. 2 est une vue schématique en coupe longitudinale suivant la ligne II-II de la Fig. 1
- les Fig. 3 et 4 sont des vues en coupe transversale prises respectivement suivant les lignes III-III et IV-IV de le Fig. 1;
- la Fig. 5 est une vue partielle en perspective d'une variante de réalisation des moyens élastiques d'obturation de la fenêtre oblongue du boîtier de direction; et
- les Fig. 6 et 7 sont des vues schématiques en coupe transversale respectivement suivant les lignes de coupe VI-VI et VII-VII de la Fig. 5.

Dans la description qui va suivre et sur les dessins, les éléments identiques ou analogues portent les mêmes chiffres de référence, éventuellement indicés.

Comme représenté sur les dessins, le mécanisme de direction assistée selon l'invention comprend un boîtier de direction, généralement désigné par la référence 10, destiné à être fixé à une partie fixe du châssis d'un véhicule automobile, et réalisé avantageusement en fonderie. Dans le boîtier 10 est agencé un ensemble coopérant d'un pignon 20, tourillonnant dans le boîtier 10, et d'une crémaillère 30 constituée en l'espèce sous la forme d'un bloc crémaillère parallélépipédique plat.

Le boîtier de direction 10 se compose d'une partie de corps principale tubulaire 11 sur les extrémités ouvertes de laquelle sont rapportées des extrémités en forme de coupelle (12, 12') comportant chacune un fond (13, 13'), ces fonds formant les parois d'extrémité axielement opposées du boîtier 10. Entre ces fonds s'étend une tige creuse 14 comportant des extrémités traversant de façon étanche les fonds 13 et 13', au moyen desquelles la tige est fixée sur les fonds 13 et 13' et sur lesquelles sont rapportés des raccords 140, 140' de connexion à des tubulures d'amenée de fluide sous pression 141, 141'. Un piston annulaire 16 est fixé centralement sur la tige creuse 14 laquelle comporte, au droit du piston 16, une cloison de séparation étanche 17 séparant le conduit intérieur 15 de la tige creuse 14 en deux portions débouchant respectivement vera l'extérieur par l'intermédiaire de passages radiaux 18 et 19 ménagés de part et d'autre du piston 16. Sur le piston 16 et la tige 14 fixes coulisse un ensemble de cylindre constitué par un corps de cylindre tubulaire 50, coopérant avec la périphérie du piston 16, et deux paliers coulissants d'extrémité 51 coopérant à coulissement étanche avec la périphérie de la tige creuse 14 et définissant ainsi, de part et d'autre du piston fixe 16, deux chambres d'actionnement 58 et 59 alimentées par les passages 18 et 19.

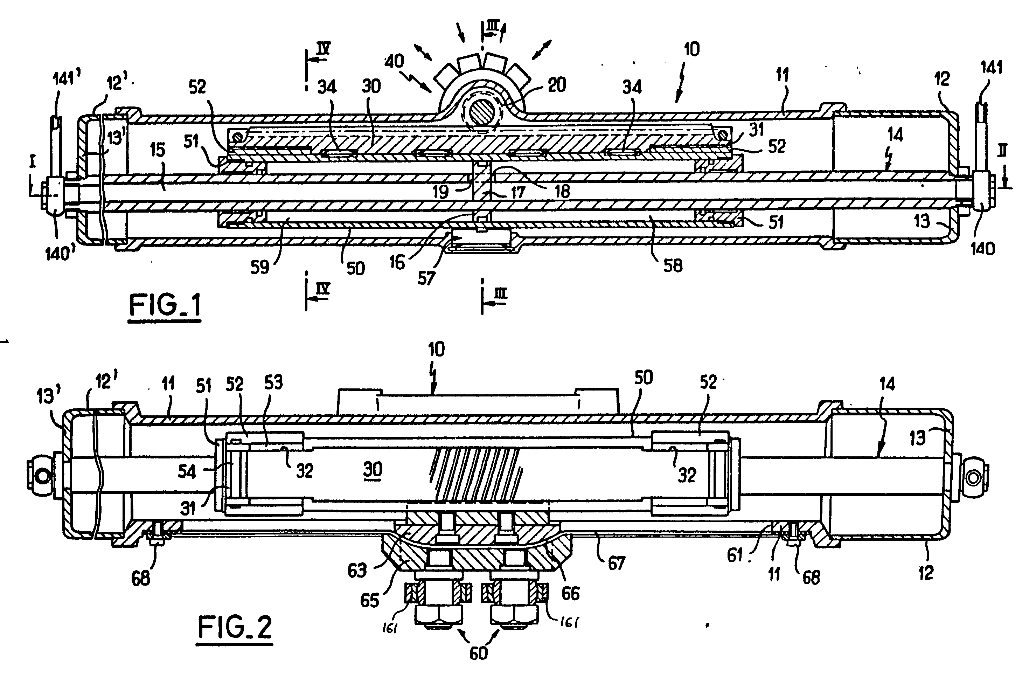

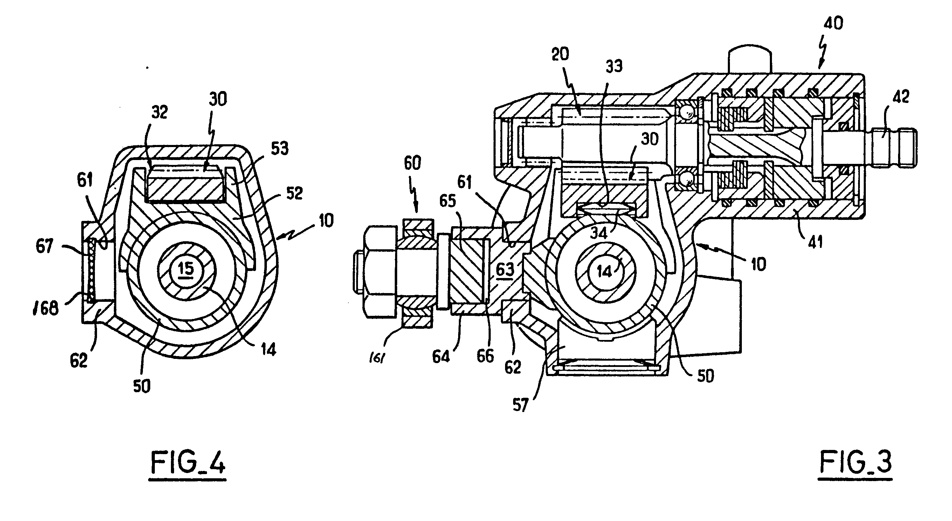

Le bloc crémaillère 30 est monté de façon flottante transversalement sur le corps de cylindre 50. Comme on le voit bien sur les Fig. 1 et 2, le corps de crémaillère 30 comporte des extrémités 31 de largeur et d'épaisseur réduites reçues chacune entre les parois latérales d'une partie formant gouttière 53 d'un arceau 52 fixé sur l'extrémité correspondante du corps de cylindre 50. Comme on le voit sur la Fig. 4, les zones d'extrémité axialement opposées du corps de crémaillère 30 comportent des parois latérales 32 courbes, avec leur convexité dirigée vers l'extérieur, tandis que ces extrémités se terminent par des pattes d'épaisseur réduite immobilisées par des traverses 54 reliant les parois en regard 53 de l'arceau 52. La face inférieure, sensiblement plate, du corps de crémaillère 30 comporte un certain nombre de logements cylindriques 33 axialement distants les unes des autres et dans lesquels sont reçus et positionnés des éléments élastiques 34 par l'intermédiaire desquels le bloc crémaillère 30 prend appui sur le corps de cylindre 50. Dans l'exemple représenté, les éléments élastiques sont constitués chacun par un empilement de rondelles élastiques qui peuvent être en variante substituées par des blocs en élastomère éventuellement armés.

Conformément à un aspect de l'invention, au corps de cylindre 50 sont solidarisés des organes 60 de connexion à des embiellages 161 d'orientation de roues orientables du véhicule, ces organes de connexion s'étendant à guidage et à coulissement au travers d'une fenêtre oblongue 61 ménagée dans une paroi latérale 62 de la partie de corps principale 11 du boîtier 10. Le pignon 20 est quant à lui relié, par l'intermédiaire d'un accouplement à course morte et d'une valve de distribution 40 - avantageusement logée dans un prolongement tubulaire transversal 41 de la partie de corps principale 11 du boîtier - à un arbre 42 de commande d'entrée du mécanisme destiné à être relié au volant de direction du véhicule. La valve de distribution 40 est par exemple du type à rotor en étoile et à ressort en C décrit dans le document EP-A-0 077 710, ses orifices de distribution étant connectés aux tubulures 141 et 141'.

On comprendra qu'avec l'agencement qui vient d'être décrit, la lisison flottante transversale entre le corps de crémaillère 30 et le corps de cylindre 50 permet d'éviter que les imperfections de la denture de la crémaillère ne se traduisent par des contraintes exercées sur les paliers de coulissement 51 du cylindre 50 ni, à l'inverse, du fait en outre de la liaison "à rotule" entre les extrémités du bloc crémaillère 30 et les gouttières 53 des arceaux 52, les mouvements angulaires éventuels, autour de son axe, du cylindre 50 - résultant notamment des imperfections de guidage entre les organes de connexion 60 et les parois de la fenêtre longitudinale 61 - ne soient transmis à la jonction dentée entre la crémaillère 30 et le pignon 20, dans un agencement limitant ainsi grandement les contraintes susceptibles d'apparaître dans les éléments actifs du mécanisme. On notera que, de façon classique, le corps de cylindre 50 porte inférieurement contre un organe d'appui élastique profilé 57 monté dans la partie de corps principale 11 du boîtier 10 à l'aplomb du pignon 20 (et du piston fixe 16).

Dans le mode de réalisation représenté sur les Fig. 1 à 4, les organes de connexion 60 comportent un bloc intérieur 63 fixé au corps de cylindre 50, reçu à coulissement dans la fenêtre 61 et se prolongeant vers l'extérieur par une partie en forme de fourche 64 dans laquelle est fixé un bloc extérieur 65 portant les rotules de raccordement aux biellettes 161. Comme on le voit sur la Fig. 3, les deux blocs 63 et 65 ménagent entre eux un passage de section rectangulaire 66 à profil se décalant progressivement de la fenêtre 61 et eu travers duquel passe une bande souple d'obturation 67 fixée par ses extrémités, en 68, aux zones de la partie de corps principale 11 délimitant axialement la fenêtre 61, et dont les bords latéraux sont reçus, de façon amovible, dans des rainures longitudinales 168 formées dans les parois en regard de la fenêtre oblongue 61. De cette façon, au fur et à mesure du déplacement des organes de connexion 60, le bande 67, contrainte de passer dans le passage 66, se dégage d'un côté de ses rainures 168 pour recouvrir son logement dans ces rainures en aval des blocs 63 et 65.

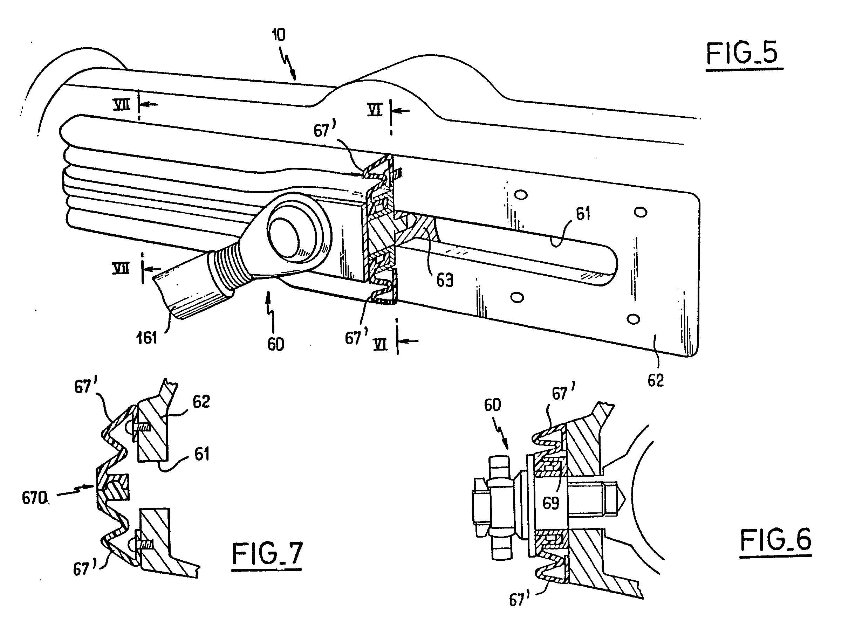

Dans le mode de réalisation représenté sur les Fig. 5 à 7, le bloc intérieur 63 des organes de connexion 60 comporte une pièce formant curseur 69 coopérant avec les extrémités complémentaires de deux voiles à ondulations longitudina les 67' pour libérer et reconstituer progressivement une liaison 670 du type fermeture à glissière lors du déplacement des organes de connexion 60 le long de la fenêtre oblongue 61, les voiles 67' étant fixés, par leurs extrémités opposées de part et d'autre de la fenêtre 61, à la paroi latérale 62 de la partie de corps principale 11 du boîtier 10.

**Revendications**

1. Mécanisme de direction assistée pour véhicule automobile comprenant:
- un boîtier de direction fixe (10) présentant une configuration générale tubulaire et dans lequel est agencé un ensemble coopérant à pignon (20) et crémaillère (30), le pignon étant destiné à être relié à un organe (42) de commande d'entrée du mécanisme;
- un ensemble d'assistance à fluide sous pression comprenant un piston fixe (16), solidarisé au boîtier par une tige creuse (14), et un cylindre mobile (50) couplé de façon élastique à la crémaillère (30) et délimitant une première (58) et une seconde (59) chambres de pression de part et d'autre du piston (16); et
- un moyen de valve de distribution (40) actionnable par l'organe de commande d'entrée (42) pour alimenter sélectivement en fluide sous pression lesdites première et seconde chambres via des passage de fluide (15; 18; 19) ménagés dans la tige creuse (14),

caractérisé en ce que le boîtier (10, 11, 12, 12') présente une configuration avec des parois d'extrémités opposées (13, 13'), la tige creuse (14) étant disposée dans le boîtier entre ces parois d'extrémités, la crémaillère (30) étant montée élastiquement sur le cylindre mobile (50) également intégré dans le boîtier (10) et en ce que le cylindre (50) et la crémaillère (30) sont guidés par des paliers coulissants d'extrémité montés dans le cylindre (50).

2. Mécanisme de direction assistée selon la revendication 1, caractérisé en ce qu'il comporte des organes (60) de connexion à des embiellages (161) de roues orientables du véhicule solidaires du cylindre mobile (50) et traversant à guidage et à coulissement une fenêtre oblongue (61) ménagée dans une paroi latérale (62) du boîtier (10).

3. Mécanisme de direction assistée selon la revendication 1 ou la revendication 2, caractérisé en ce qu'il comporte des appuis élastiques (34) entre la crémaillère (30) et le cylindre mobile (50).

4. Mécanisme de direction assistée selon la revendication 3, caractérisé en ce que la crémaillère (30) est maintenue à ses extrémités (31) par des arceaux (52) solidaires du cylindre mobile (50).

5. Mécanisme de direction assistée selon la revendication 4, caractérisé en ce que les extrémités (31) de la crémaillèare (30) comportent des parois latérales (32) convexes et sont reçues dans une partie formant gouttière (53) des arceaux (52).

6. Mécanisme de direction assistée selon l'une des revendications 3 à 5, caractérisé en ce que les appuis élastiques sont constitués d'éléments élastiques (34) logés dans des évidements (33) de la crémaillère (30).

7. Mécanisme de direction assistée selon la revendication 6, caractérisé en ce que les éléments élastiques (34) sont constitués chacun d'un empilement de rondelles élastiques.

8. Mécanisme de direction assistée selon l'une des revendications 2 à 7, caractérisé en ce qu'il comporte des moyens élastiques (67, 67') d'obturation de la fenêtre oblongue (61).

9. Mécanisme de direction assistée selon la revendication 8, caractérisé en ce que les moyens élastiques d'obturation sont constitués par une bande souple (67) reçue dans des rainures (168) de la fenêtre (61) et traversant un passage (66) décelé extérieurement ménagé dans les organes de connexion (63, 65).

10. Mécanisme de direction assistée selon la revendication 8, caractérisé en ce que les moyens élastiques d'obturation comprennent deux voiles à ondulations longitudinales (67') reliés centralement de façon libérable par une liaison du type fermeture à glissière (670) dont le cur seur est formé par les organes de connexion (69).

**Patentansprüche**

1. Servolenkmechanismus für ein Kraftfahrzeug, der eine ungefähr rohrförmige Gestalt besitzt und versehen ist mit:
- einem festgelegten Lenkgehäuse (10), in dem eine Anordnung aus Zahnrad (20) und Zahnstange (30) vorgesehen ist, wobei das Zahnrad mit einem Eingangssteuerglied (42) des Mechanismus verbindbar ist;
- einer Druckmittel-Servoeinrichtung mit einem feststehenden Kolben (16), der mit dem Gehäuse durch eine hohle Stange (14) fest verbunden ist, und einem beweglichen Zylinder (50), der mit der Zahnstange (30) elastisch verbunden ist und eine erste Druckkammer (58) und eine zweite Druckkammer (59) beidseitig zum Kolben (16) begrenzt; und
- einem Verteilerventil (40), das durch das Eingangssteuerglied (42) betätigbar ist, um die erste und zweite Kammer über Strömungskanäle (15; 18; 19) in der hohlen Stange (14) wahlweise mit Druckmittel zu versorgen, dadurch gekennzeichnet, daß das Gehäuse (10, 11, 12, 12') eine Gestalt mit gegenüberliegenden Endwänden (13, 13') aufweist, wobei die hohle Stange (14) in dem Gehäuse zwischen diesen Endwänden angeordnet ist, wobei die Zahnstange (30) elastisch an dem beweglichen Zylinder (50) angebracht ist, der ebenfalls in das Gehäuse (10) integriert ist, und daß der Zylinder (50) und die Zahnstange (30) durch im Zylinder (50) angebrachte Endgleitlager geführt sind.

2. Servolenkmechanismus nach Anspruch 1, dadurch gekennzeichnet, daß er Teile (60) zur Verbindung mit Lenkern (161) lenkbarer Räder des Fahrzeuges aufweist, die mit dem beweglichen Zylinder (50) fest verbunden sind und sich gleitend geführt durch ein längliches Fenster (61) erstrecken, das in einer Seitenwand (62) des Gehäuses (10) gebildet ist.

3. Servolenkmechanismus nach Anspruch 1 oder 2, dadurch gekennzeichnet, daß er elastische Abstützungen (34) zwischen der Zahnstange (30) und dem beweglichen Zylinder (50) aufweist.

4. Servolenkmechanismus nach Anspruch 3, dadurch gekennzeichnet, daß die Zahnstange (30) an seinen Enden (31) von Bügeln (52) gehalten wird, die mit dem beweglichen Zylinder (50) fest verbunden sind.

5. Servolenkmechanismus nach Anspruch 4, dadurch gekennzeichnet, daß die Enden (31) der Zahnstange (30) Seitenwände (32) aufweisen, die konvex sind und von einem tropfenförmigen Abschnitt (53) der Bügel (52) aufgenommen werden.

6. Servolenkmechanismus nach einem der Ansprüche 3 bis 5, dadurch gekennzeichnet, daß die elastischen Abstützungen von elastischen Teilen (34) gebildet werden, die in Ausnehmungen (33) der Zahnstange (30) untergebracht sind.

7. Servolenkmechanismus nach Anspruch 8, dadurch gekennzeichnet, daß die elastischen Teile (34) jeweils von einem Stapel elastischer Scheiben gebildet werden.

8. Servolenkmechanismus nach einem der Ansprüche 2 bis 7, dadurch gekennzeichnet, daß er elastische Schließmittel (67, 67') zum Verschließen des länglichen Fensters (61) aufweist.

9. Servolenkmechanismus nach Anspruch 8, dadurch gekennzeichnet, daß die elastischen Schließmittel von einem biegsamen Band (67) gebildet wird, das von Nuten (168) des Fensters (61) aufgenommen wird und sich durch einen nach außen versetzten Kanal (66) in den Verbindungsteilen (63, 65) erstreckt.

10. Servolenkmechanismus nach Anspruch 8, dadurch gekennzeichnet, daß die elastischen Schließmittel zwei Manschettenteile (67') mit Längswellungen aufweisen, die zentral in lösbarer Weise durch eine Gleitverbindung (670) verbunden sind, deren Läufer von den Verbindungsteilen (69) gebildet wird.

## Claims

1. Assisted steering mechanism for a motor vehicle incorporating:
- a fixed steering casing (10) which has a general tubular configuration and in which a cooperating assembly with a pinion (20) and a rack (30) is arranged, the pinion being intended to be joined to a component (42) for controlling the input to the mechanism;
- an assistance assembly with fluid under pressure incorporating a fixed piston (16), firmly fixed to the casing by a hollow rod (14), and a movable cylinder (50) coupled in an elastic manner with the rack (30) and defining first (58) and second (59) pressure chambers on each side of the piston (16); and
- a distribution valve means (40) capable of being actuated by the input control component (42) so as to supply the said first and second chambers selectively with fluid under pressure via fluid passages (15; 18; 19) arranged in the hollow rod (14),
characterised in that the casing (10, 11, 12, 12') has a configuration with opposite end walls (13, 13'), the hollow rod (14) being situated in the casing between these end walls, the rack (30) being elastically mounted on the movable cylinder (50) also incorporated in the casing (10) and in that the cylinder (50) and the rack (30) are guided by sliding end bearings mounted in the cylinder.

2. Assisted steering mechanism according to Claim 1, characterised in that it incorporates components (60) for connection to linkages (161) for the steerable wheels of the vehicle firmly fixed to the movable cylinder (50) and passing through, so as to guide and to slide, a rectangular window (61) arranged in a lateral wall (62) of the casing (10).

3. Assisted steering mechanism according to Claim 1 or Claim 2, characterised in that it incorporates elastic supports (34) between the rack (30) and the movable cylinder (50).

4. Assisted steering mechanism according to Claim 3, characterised in that the rack (30) is held at its ends (31) by arches (52) firmly fixed to the movable cylinder (50).

5. Assisted steering mechanism according to Claim 4, characterised in that the ends (31) of the rack (30) incorporate convex lateral walls (32) and enter into a portion forming a channel (53) of the arches (52).

6. Assisted steering mechanism according to one of Claims 3 to 5, characterised in that the elastic supports consist of elastic components (34) housed in cavities (33) in the rack (30).

7. Assisted steering mechanism according to Claim 6, characterised in that the elastic components (34) each consist of a stack of elastic washers.

8. Assisted steering mechanism according to one of Claims 2 to 7, characterised in that it incorporates elastic means (67, 67') for sealing the rectangular window (61).

9. Assisted steering mechanism according to Claim 8, characterised in that the elastic sealing means consist of a flexible strip (67) housed in grooves (168) of the window (61) and passing through a passage (66) which is offset externally, arranged in the connecting components (63, 65).

10. Assisted steering mechanism according to Claim 8, characterised in that the elastic sealing means incorporate two covers with longitudinal undulations (67') joined centrally, so as to be capable of being separated by a joint of the sliding closure type (670) whose slide is formed by the connecting components (69).

IV    III
↓ III ↓
40    20    10

141'  12'  52    34  30        34      11        12  141
13'                                31  52          14
I     15  51                                          II
              19  17  18
140'              16  57              51            140
      59    50                    58

FIG.1

IV    III

10

13' 12' 11 51 52 53          50  52        14
                                              13
54                                32
      31    32    30
                          67        61
68              63              11  68        12
            65  66
              161        161
              60

FIG.2

0 144 259

FIG_4

FIG_3

0 144 259

FIG.5

FIG.6

FIG.7